# EUROPEAN PATENT SPECIFICATION

(11) **EP 2 169 574 B1**
(45) Date of publication and mention of the grant of the patent: **31.10.2012**
(21) Application number: 08757741.7
(22) Date of filing: 16.06.2008
(51) Int. Cl.: H04L 12/66, G06Q 30/00, H04M 15/00, H04L 12/14, G06F 17/30

(54) **A SYSTEM AND METHOD FOR CALCULATING FEES**
SYSTEM UND VERFAHREN ZUR BERECHNUNG VON GEBÜHREN
SYSTÈME ET PROCÉDÉ POUR CALCULER DES FRAIS

(30) Priority: 18.07.2007 CN 200710130429
(43) Date of publication of application: 31.03.2010
(73) Proprietor: Huawei Technologies Co., Ltd., Longgang District, Shenzhen Guangdong 518129 (CN)
(72) Inventor: HUI, Junrui, Guangdong 518129 (CN)
(74) Representative: Pfenning, Meinig & Partner GbR
(86) International application number: PCT/CN2008/071330
(87) International publication number: WO 2009/009978

(56) References cited:
- WO-A1-00/70858
- CN-A- 1 466 309
- CN-A- 1 674 520
- CN-A- 1 691 723
- US-A1- 2004 143 522
- US-A1- 2005 218 211
- US-A1- 2007 149 849

## Description

This application claims priority to Chinese Patent Application No. 200710130429.2, entitled "Account data snapshot method and device, account balancing method and real time charging system" and filed with the Chinese Patent Office on July 18, 2007.

### Field of the Invention

The present invention relates to the field of communication technologies and in particular to a charging system and method.

### Background of the Invention

Along with constant advancement of operation levels of telecommunication operators and constant development of charging systems, the telecommunication operators are demanding increasingly for correctness and accuracy of the charging systems. A telecommunication operator typically requires a snapshot of user account data and phone bill information for a previous day prior to 00:00 per day and an export of the user account data and phone bill information for a previous day prior to 00:00 from a charging system, and an accounting system checks the account data and phone bill data to ensure consistency of a fee deducted from a user account balance with a resultant phone fee, thereby verifying correctness of fee calculation by and a phone bill output from the charging system.

During usage of a telecommunication service by a user, an external function entity (e.g., a user management system, a network element management system, and so on) performs real time interaction with the charging system, and the charging system performs a real time budget, price approval and deduction for the service of the user, where such a charging system is referred to as a real time charging system. For a real time charging system, the user account data in the charging system has a real time change, but it takes a period of time to take a snapshot of all the account data in the charging system. During this period of time for taking the snapshot of the account data, the user may further consume or replenish, and thus the user account data may be changed, thereby resulting in inaccuracy of the snapshot of the account data.

On the other hand, the telecommunication operator typically adopts per-slice charging in which a long duration of the service for a user is sliced for a reduced risk of an overdue bill. For example, for charging a voice call, the call can be charged once for an access to a network element every 5 minutes of a charging time slice. If a process of the service for a user crosses 00:00, then one part of a time slice may be charged before 00:00 and the other part of the time slice may be charged after 00:00.

There was proposed in the conventional technology a method for taking a snapshot of account data in a real time charging system by real time mirroring of the account data. Data in an account data unit and a mirror storage unit is processed concurrently during normal operation of the real time charging system. An account debiting unit is disconnected from the mirror storage unit for a snapshot of account data, and at this time an account debiting process of the account debiting unit works with only the account data unit but not the mirror storage unit. A snapshot unit takes a snapshot of the account data in the mirror storage unit, and a real time mirror connection between the account debiting unit and the mirror storage unit is resumed after the use of the snapshot data is completed.

The inventors have identified during making the invention that in such a snapshot method, two copies of user account data have to be stored concurrently in the charging system, and the mirror storage unit has to be updated along with the charging system in a way that they can be updated with concurrent successes or failures. Consequently, the storage space of the system is doubled and the system is made more complex. The account data in the mirror storage unit has to be recovered at the end of each snapshot of the user account data; otherwise the account data unit may have data inconsistent with that in the mirror storage unit, thereby making maintenance of the system more complex. Furthermore, incorrect statistics of an account balance may result if the use of a service for a user crosses a time point for an account balance audit.

US 2004/143522 A1 discloses a system, computer product and method for providing a set of documents reconciled in accordance with business rules via the internet. The system, computer product and method of the present invention enables web-based bookkeeping in particular.

### Summary of the Invention

Embodiments of the invention provide a charging system and method and particularly include an account data snapshot method and device, an account balancing method and a charging system, which can address the problem in the conventional technology of failing to achieve an account balance due to inaccuracy of account data and/or a phone bill in a real time charging system while ensuring the real time charging system to be perfectly real time.

An account data snapshot method includes:
receiving, by an account debiting unit, an account debiting request, and sending account information in the account debiting request upon determination of an ongoing snapshot process of the account data to a snapshot unit;
exporting, by the snapshot unit, account data corresponding to the account information, and returning an export end notification to the account debiting unit; and
performing, by the account debiting unit, an account debiting process in response to the account debiting request.

A computer readable memory medium includes a computer program enabling one or more processors to implement the above account data snapshot method.

An account balancing method includes:
obtaining account data, including: receiving an account debiting request, exporting account data corresponding to account information in the account debiting request upon determination of an ongoing snapshot process of the account data, performing an account debiting process in response to the account debiting request, and obtaining the resultant account data from the snapshot process;
obtaining phone bill data, including: dividing a phone bill crossing a snapshot time point into a first phone bill and a second phone bill, writing the first phone bill generated before the snapshot time point into phone bill data before the snapshot time point, writing the second phone bill generated after the snapshot time point into phone bill data after the snapshot time point, and obtaining the phone bill data before the snapshot time point; and
comparing the account data and the phone bill data before the snapshot time point to achieve an account balance.

A computer readable memory medium includes a computer program enabling one or more processors to implement the above account balancing method.

An account data snapshot device includes an account debiting unit, an account data unit and a snapshot unit, in which:
the account debiting unit is adapted to receive an account debiting request, to send account information in the account debiting request to the snapshot unit upon determination of an ongoing snapshot process of account data, to receive an export end notification returned from the snapshot unit, and to send the account debiting request to the account data unit;
the snapshot unit is adapted to export the account data stored in the account data unit, to receive the account information sent from the account debiting unit, to export the account data corresponding to the account information, and to return the export end notification to the account debiting unit; and
the account data unit is adapted to store the account data and to perform an account debiting process in response to the account debiting request from the account debiting unit.

A real time charging system includes an account debiting unit, an account data unit, a snapshot unit and a phone bill processing unit, in which:
the account debiting unit is adapted to receive an account debiting request from an external function entity, to send account information in the account debiting request to the snapshot unit, to receive an export end notification fed back from the snapshot unit, to send the account debiting request to the account data unit, and to return an account debiting process result to the external function entity;
the account data unit is adapted to store the account data and to perform an account debiting process in response to the account debiting request from the account debiting unit;
the snapshot unit is adapted to export the account data stored in the account data unit, to first export the account data corresponding to the account information upon reception of the account information sent from the account debiting unit, and to send the export end notification to the account debiting unit; and
the phone bill processing unit is adapted to divide a phone bill crossing a snapshot time point and to export phone bill data before the snapshot time point.

### Brief Description of the Drawings

Fig.1 is a flow chart of a general implementation principle of an account data snapshot method according to an embodiment of the invention;

Fig.2 is a flow chart of a general implementation principle of an account balancing method according to an embodiment of the invention;

Fig.3 is a schematic diagram of a phone bill division method according to an embodiment of the invention;

Fig.4 is a schematic diagram of functions and a structure of an account data snapshot device according to an embodiment of the invention;

Fig.5 is a schematic diagram of a structure of an account debiting unit according to an embodiment of the invention;

Fig.6 is a schematic diagram of a structure of a snapshot unit according to an embodiment of the invention;

Fig.7 is another schematic diagram of a structure of a snapshot unit according to an embodiment of the invention;

Fig.8 is a schematic diagram of a structure of a real time charging system according to an embodiment of the invention;

Fig.9 is a schematic diagram of a structure of a phone bill processing unit according to an embodiment of the invention; and

Fig.10 is another schematic diagram of a structure of a phone bill processing unit according to an embodiment of the invention.

### Detailed Description of the Invention

An embodiment of the invention proposes an account data snapshot method in a real time charging system in which an account debiting request is received through an account debiting unit, and account information in the account debiting request is sent to a snapshot unit upon determination of an ongoing snapshot process of account data; the snapshot unit exports the account data corresponding to the account information and returns an export end notification to the account debiting unit; and the account debiting unit performs an account debiting process in response to the account debiting request. Account snapshot data and phone bill data is compared in combination with a phone bill division method to thereby achieve an account balance in the real time charging system.

Additionally, two parameters, i.e., a snapshot time point parameter and a snapshot status parameter, are set in an embodiment of the invention, where the snapshot time point parameter is a predefined parameter, and the snapshot unit starts a snapshot process on account data upon arrival of a system time at a snapshot time point to result in the account data in the real time charging system at the snapshot time point, and the snapshot time point is adjustable.

The snapshot status parameter which is set by a snapshot status of the system includes two feature values of "No-Snapshot" and "Under-Snapshot". "No-Snapshot" indicates that the snapshot unit performs no snapshot process on the account data, and "Under-Snapshot" indicates that the snapshot unit is performing a snapshot process on the account data. The snapshot status parameter can be set by the snapshot unit in accordance with a snapshot performance status or by an alternative function unit in accordance with a snapshot performance status of the snapshot unit. Upon arrival of a preset snapshot time point, the snapshot unit starts a snapshot process of the account data and sets the snapshot status parameter as "Under-Snapshot"; and the snapshot unit sets the snapshot status parameter as "No-Snapshot" at the end of the snapshot process of the account data.

A general implementation principle, embodiments and their correspondingly attainable advantageous effects are set forth in details hereinafter with reference to the drawings.

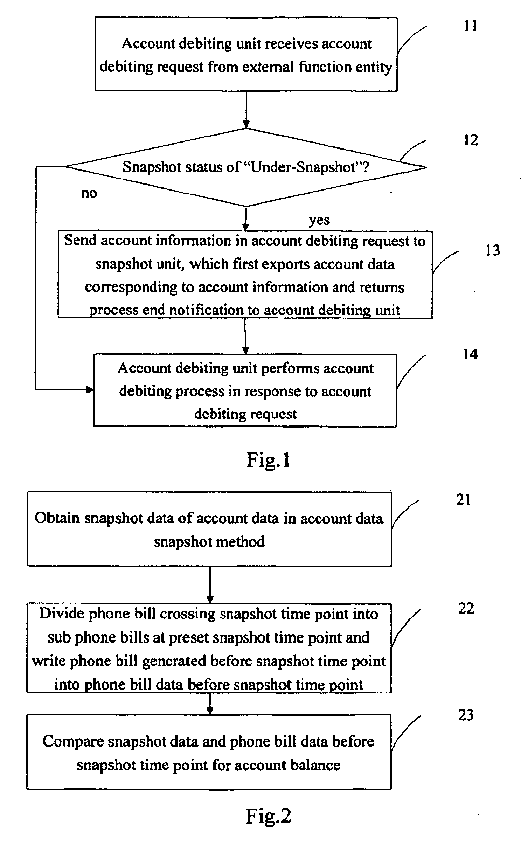

As illustrated in Fig.1, it is a flow chart of a general implementation principle of an account data snapshot method according to an embodiment of the invention, where:

Step 11: The account debiting unit receives an account debiting request from an external function entity.

Additionally, the external function entity can be a function entity capable of interacting with the real time charging system, such as a user management system, a network element management system, and so on.

Step 12: The account debiting unit determines a current snapshot status in accordance with a feature value of the snapshot status parameter. For example, the step 14 is executed directly if the current feature value of the snapshot status parameter is "No-Snapshot" or the step 13 is executed if the current feature value of the snapshot status parameter is "Under-Snapshot".

Additionally, the snapshot status parameter is set by the snapshot unit or an alternative function unit, and the account debiting unit extracts the feature value of the snapshot status parameter for relevant determination prior to an account debiting process.

Step 13: The account debiting unit sends account information in the account debiting request to the snapshot unit, and the snapshot unit first exports the account data corresponding to the account information upon reception of the account information and returns an export end notification to the account debiting unit.

Additionally, the snapshot unit determines whether the account data corresponding to the account information has been exported upon reception of the account information, and if so, then the snapshot unit sends an export end notification notifying the account debiting unit of allowing an account debiting process; otherwise the snapshot unit first exports the account data corresponding to the account information and sends to the account debiting unit an export end notification notifying the account debiting unit of allowing an account debiting process.

Correspondingly, the snapshot unit sets the feature value of the snapshot status parameter as a status of "Under-Snapshot" after starting a snapshot process and sets the feature value of the snapshot status parameter as a status of "No-Snapshot" after all the account data is exported as snapshot data.

Step 14: The account debiting unit performs an account debiting process in response to the account debiting request.

The above embodiment relates to the account data snapshot method according to an embodiment of the invention, and based upon the above account data snapshot method, and an embodiment of the invention provides an account balancing method as illustrated in Fig.2 including:

Step 21: The snapshot data of the account data is obtained in the account data snapshot method according to the above embodiment.

Step 22: A phone bill crossing the preset snapshot time point is divided into two phone bills, denoted respectively with a first phone bill and a second phone bill. The first phone bill generated before the snapshot time point is written into phone bill data before the snapshot time point and the second phone bill generated after the snapshot time point is written into phone bill data after the snapshot time point.

As mentioned previously, a telecommunication operator slices a long duration of a service for a user and performs an account debiting process per-slice for a reduced risk of an overdue bill. However, no process is performed for a phone bill of the user service with a long duration, and the phone bill for a long duration is written merely as a single phone bill. In view of some long-duration phone bills crossing the snapshot time point of the system, these phone bills shall be divided for a balance account.

In a possible alternative phone bill division method, a phone bill crossing the snapshot time point is divided into two phone bills, denoted respectively with a first phone bill and a second phone bill, with the last time slice point prior to the snapshot time point being a boundary by a preset time slice, the first phone bill generated before the snapshot time point is written into phone bill data before the snapshot time point and the second phone bill generated after the snapshot time point is written into phone bill data after the snapshot time point.

Additionally, the preset time slice is a value which can be preset and adjusted by the system as necessary in practice. A time slice is of a preset length identical to that of a charging time slice of the real time charging system, and both of the preset lengths are set by the system.

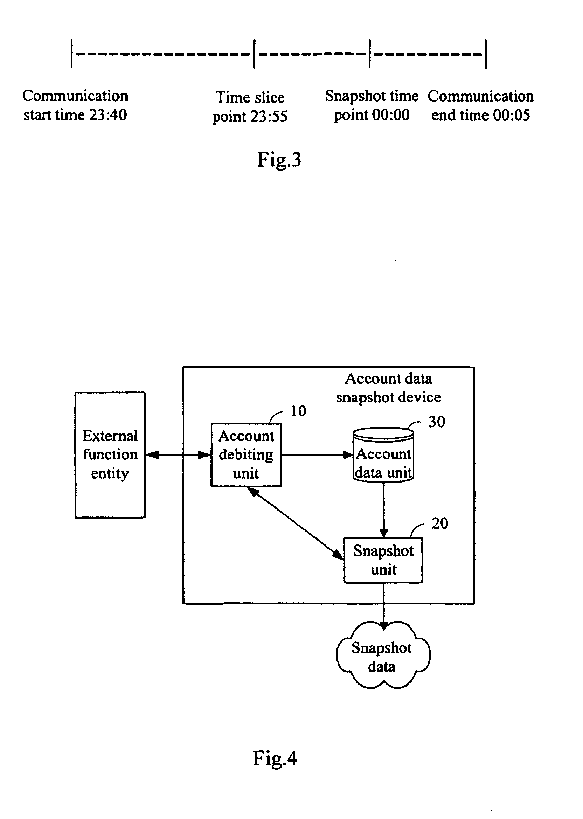

As illustrated in Fig.3, it is a schematic diagram of a phone bill division method, where communication of a user lasts from 23:40 till 00:05, a snapshot time point of the system is 00:00, each time slice is of 15 minutes, and 23:55 is a time slice point.

At the end of communication, the phone bill processing unit divides a bill for the present communication into two phone bills with the last time slice point of 23:55 prior to the snapshot time point of 00:00 being a boundary, so that one bill generated for the first time slice of 23:40-23:55 is written into phone bill data before the snapshot time point (a previous day) for it is generated before the snapshot time point, and the other bill generated for 23:56~00:05 is written into phone bill data after the snapshot time point (a next day) for it is generated after the snapshot time point.

Additionally, since a bill is generated at the end of communication in the conventional technology, that is, a phone bill process is performed at the end of communication, therefore an end time of a phone bill generated for each time slice is taken as a time slice point of the phone bill for division of a phone bill per time slice in the present embodiment. Thus, although a communication period of communication between 23:56~00:00 is before 00:00, the communication period of communication between 23:56~00:00 included in the communication time slice for 23:56-00:05 is attributed to the same phone bill generated at the time of 00:05, and therefore this phone bill is written into the phone bill data after the snapshot time point (the next day).

Additionally, the phone bill is divided by the time precision of minutes in the present embodiment, but a bill is generally divided by a time precision of seconds in a practical application system.

The present embodiment illustrates the case where there is only one time slice point before the snapshot time point. Indeed, a plurality of time slice points may be present before a snapshot time point, and the last time slice point before the snapshot time point is taken as a boundary, phone bills before the last time slice point prior to the snapshot time point are generated as a single phone bill. Also a single phone bill may be generated if a plurality of time slice points is present after a snapshot time point.

Step 23: The snapshot data and the phone bill data before the snapshot time point is compared for an account balance.

With the solution according to the embodiment of the invention, it is possible to address the problem of failing to achieve an account balance due to inaccuracy of account data and/or a phone bill in the real time charging system while ensuring the real time charging system to be perfectly real time.

Correspondingly, an embodiment of the invention further provides an account data snapshot device as illustrated in Fig.4 including an account debiting unit 10, a snapshot unit 20 and an account data unit 30 particularly as follows.

The account debiting unit 10 is adapted to receive an account debiting request from an external function entity, to send account information in the account debiting request to the snapshot unit 20 upon determination of an ongoing snapshot process of account data, to receive an export end notification fed back from the snapshot unit 20, to send the account debiting request to the account data unit 30, and to return an account debiting process result to the external function entity.

The snapshot unit 20 is adapted to export the account data stored in the account data unit 30, to first export the account data corresponding to the account information upon reception of the account information sent from the account debiting unit 10, and to send the export end notification to the account debiting unit 10.

The account data unit 30 is adapted to store the account data and to perform an account debiting process in response to the account debiting request from the account debiting unit 10.

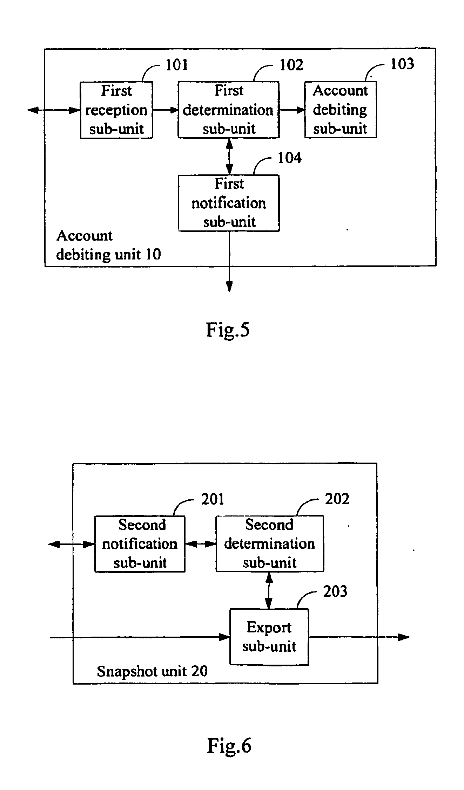

Preferably, as illustrated in Fig.5, the account debiting unit 10 according to an embodiment of the invention further includes a first reception sub-unit 101, a first determination sub-unit 102, an account debiting sub-unit 103 and a first notification sub-unit 104, where:

The first reception sub-unit 101 is adapted to receive the account debiting request from the external function entity, to send the request to the first determination sub-unit 102, and to return the account debiting process result to the external function entity upon completion of the account debiting process.

The first determination sub-unit 102 is adapted to determine whether the account data is currently in a snapshot status in response to the received account debiting request, and if so, then to send the account information in the account debiting request to the first notification sub-unit 104, receive the export end notification returned from the first notification sub-unit 104 and send the account debiting request to the account debiting sub-unit 103; otherwise, to send the account debiting request directly to the account debiting sub-unit 103.

The account debiting sub-unit 103 is adapted to perform the account debiting process on the account data in response to the received account debiting request.

The first notification sub-unit 104 is adapted to send the account information to the snapshot unit 20 in response to the notification from the first determination sub-unit 102, to receive the export end notification returned from the snapshot unit 20, and to send the notification to the first determination sub-unit 102.

Preferably, as illustrated in Fig.6, the snapshot unit 20 according to an embodiment of the invention further includes a second notification sub-unit 201, a second determination sub-unit 202 and an export sub-unit 203.

The second notification sub-unit 201 is adapted to receive the account information sent from the account debiting unit 10, to send the account information to the second determination sub-unit 202, to receive a result notification sent from the second determination sub-unit 202, and to send the result notification to the account debiting unit 10.

The second determination sub-unit 202 is adapted to determine whether the account data corresponding to the account information has been exported in accordance with the received account information; and if so, then to send the export end notification directly to the second notification sub-unit 201, otherwise, to send an export request to the export sub-unit 203, and to receive a process result and send the export end notification to the second notification sub-unit 201.

The export sub-unit 203 is adapted to export the account data, to first export the account data corresponding to the account information in response to the export request sent from the second determination sub-unit 202, and to return the process result.

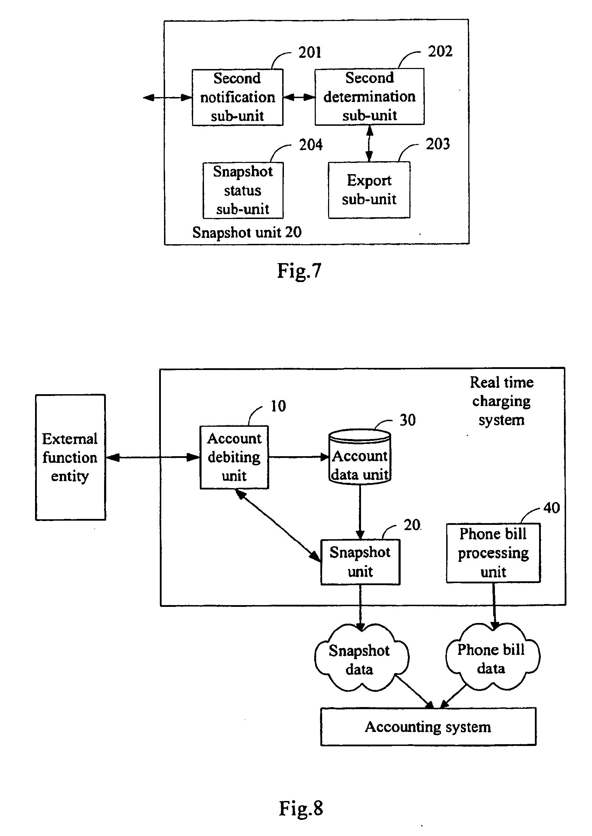

Preferably, the snapshot unit 20 in the above embodiment further includes a snapshot status sub-unit 204 as illustrated in Fig.7.

The snapshot status sub-unit 204 is adapted to adjust a snapshot status parameter in accordance with a snapshot status of the account data.

Additionally, the snapshot status parameter is a system parameter with two feature values of "No-Snapshot" and "Under-Snapshot". "No-Snapshot" denotes that the snapshot unit 20 performs no snapshot process on the account data, and "Under-Snapshot" indicates that the snapshot unit 20 is performing a snapshot process on the account data.

Correspondingly, an embodiment of the invention further provides a real time charging system as illustrated in Fig.8 including an account debiting unit 10, a snapshot unit 20, an account data unit 30 and a phone bill processing unit 40, where:

The account debiting unit 10 is adapted to receive an account debiting request from an external function entity, to send account information in the account debiting request to the snapshot unit 20, to receive an export end notification fed back from the snapshot unit 20, to send the account debiting request to the account data unit 30, and to return an account debiting process result to the external function entity.

The snapshot unit 20 is adapted to export the account data stored in the account data unit 30, to first export the account data corresponding to the account information upon reception of the account information sent from the account debiting unit 10, and to send the export end notification to the account debiting unit 10.

The account data unit 30 is adapted to store the account data and to perform an account debiting process in response to the account debiting request from the account debiting unit 10.

The phone bill processing unit 40 is adapted to divide a phone bill crossing a snapshot time point and to export phone bill data before the snapshot time point.

An accounting system compares the exported data and the phone bill data to ensure an account balance.

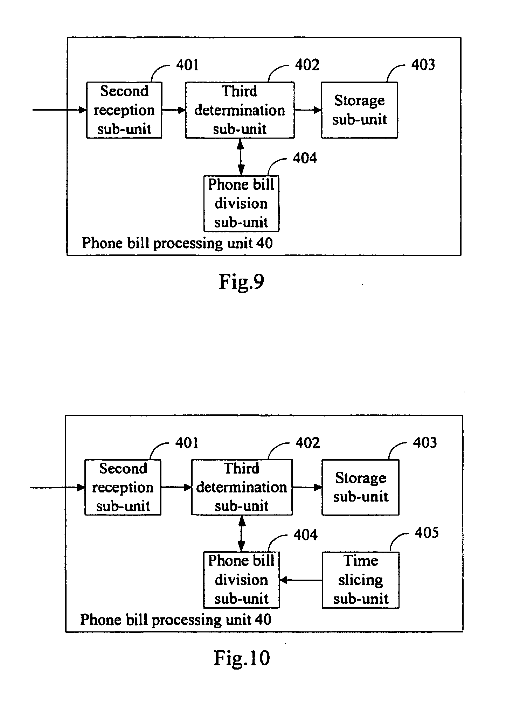

Preferably, as illustrated in Fig.9, the phone bill processing unit 40 according to an embodiment of the invention further includes a second reception sub-unit 401, a third determination sub-unit 402, a storage sub-unit 403 and a phone bill division sub-unit 404, where:

The second reception sub-unit 401 is adapted to receive a phone bill write request and to send the phone bill write request to the third determination sub-unit 402.

The third determination sub-unit 402 is adapted to determine whether the phone bill corresponding to the phone bill write request crosses the snapshot time point in response to the received phone bill write request, and if so, then to send a phone bill division request to the phone bill division sub-unit 404, and send the phone bill write request to the storage sub-unit 403 in accordance with a returned phone bill division result; otherwise, to send the phone bill write request directly to the storage sub-unit 403.

The storage sub-unit 403 is adapted to store the phone bill data and to write the corresponding phone bill into the phone bill data in response to the phone bill write request sent from the third determination sub-unit 402.

The phone bill division sub-unit 404 is adapted to divide the corresponding phone bill in response to the phone bill division request sent from the third determination sub-unit 402 and to return the phone bill division result.

Preferably, as illustrated in Fig.10, the phone bill processing unit 40 as described above further includes a time slicing sub-unit 405 adapted to obtain a system-preset phone bill division time slice and to send the time slice to the phone bill division sub-unit 404.

The phone bill division sub-unit 404 divides the phone bill by the received time slice.

Those ordinarily skilled in the art can appreciate that all or part of the steps in the method according to the above embodiments can be implemented by a program instructing relevant hardware, which may be stored in a computer readable memory medium, e.g., an ROM/RAM, a magnetic disk, an optical disk, and so on.

To summarize, when taking a snapshot of account data in the real time charging system in the embodiments of the invention, the account debiting unit sends the account information in the account debiting request to the snapshot unit upon reception of the account debiting request from the external function entity; the snapshot unit first exports the account data of the account and notifies the account debiting unit; and the account debiting unit performs an account debiting process in response to the account debiting request. Correspondingly in the embodiments of the invention, a phone bill crossing a snapshot time point is divided, and phone bill data before the snapshot time point is exported; and the snapshot data and the exported phone bill is compared for an account balance. The embodiments of the invention can address the problem in the conventional technology of failing to achieve an account balance due to inaccuracy of account data and/or a phone bill in the real time charging system while ensuring the real time charging system to be perfectly real time, thereby resulting in an improved operation efficiency and a reduced operation cost of an operator.

## Claims

1. An account data snapshot method, comprising:
receiving an account debiting request (11), and exporting account data corresponding to account information in the account debiting request (13) upon determination of an ongoing snapshot process of the account data (12); and
performing an account debiting process according to the account debiting request (14).

2. The method according to claim 1, wherein after receiving the account debiting request, the method further comprises:
determining whether a current snapshot status is an under-snapshot status in which the snapshot process is being performed on the account data, and if so, determining the ongoing snapshot process of the account data.

3. The method according to claim 2, wherein if it is determined that the current snapshot status is a no-snapshot status in which no snapshot process is performed on the account data, performing directly the account debiting process according to the account debiting request.

4. The method according to claim 3, wherein the snapshot process of the account data is started at a preset snapshot time point, and setting the current snapshot status as the under-snapshot status; and
setting the current snapshot status as the no-snapshot status at the end of the snapshot process of the account data.

5. The method according to claim 1, wherein after receiving the account debiting request, the method further comprises: determining whether the account data corresponding to the account information in the account debiting request has been exported, and if so, returning directly an export end notification; otherwise exporting the account data corresponding to the account information and returning the export end notification.

6. An account balancing method, comprising:
obtaining account data, comprising: receiving an account debiting request, exporting account data corresponding to account information in the account debiting request upon determination of an ongoing snapshot process of the account data, performing an account debiting process in response to the account debiting request, and obtaining the resultant account data from the snapshot process (21);
obtaining phone bill data, comprising: dividing a phone bill crossing a snapshot time point into a first phone bill and a second phone bill, writing the first phone bill generated before the snapshot time point into phone bill data before the snapshot time point, writing the second phone bill generated after the snapshot time point into phone bill data after the snapshot time point, and obtaining the phone bill data before the snapshot time point (22); and
comparing the account data and the phone bill data before the snapshot time point to achieve an account balance (23).

7. The method according to claim 6, wherein the dividing of the phone bill crossing the snapshot time point into the first phone bill and the second phone bill comprises:
dividing the phone bill into the first phone bill and the second phone bill with the last time slice before the snapshot time point being a boundary according to a preset time slice.

8. A computer readable memory medium, **characterized by** comprising a computer program enabling one or more processors to implement the method according to claim 6.

9. An account data snapshot device, comprising an account debiting unit, an account data unit and a snapshot unit, wherein:
the account debiting unit (10) is adapted to receive an account debiting request, to send account information in the account debiting request to the snapshot unit (20) upon determination of an ongoing snapshot process of account data, to receive an export end notification returned from the snapshot unit, and to send the account debiting request to the account data unit (30);
the snapshot unit (20) is adapted to export the account data stored in the account data unit (30), to receive the account information sent from the account debiting unit (10), to export the account data corresponding to the account information, and to return the export end notification to the account debiting unit (10); and
the account data unit (30) is adapted to store the account data and to perform an account debiting process in response to the account debiting request from the account debiting unit (10).

10. The device according to claim 9, wherein the account debiting unit (10) further comprises a first reception sub-unit (101), a first determination sub-unit (102), an account debiting sub-unit (103) and a first notification sub-unit, wherein:
the first reception sub-unit (101) is adapted to receive the account debiting request and to send the request to the first determination sub-unit (102);
the first determination sub-unit (102) is adapted to determine whether the account data is currently in a snapshot status, and if so, to send the account information in the account debiting request to the first notification sub-unit (104), to receive the export end notification returned from the first notification sub-unit (104) and to send the account debiting request to the account debiting sub-unit (103); otherwise, to send the account debiting request directly to the account debiting sub-unit (103);
the account debiting sub-unit (103) is adapted to perform the account debiting process on the account data in response to the received account debiting request; and
the first notification sub-unit (104) is adapted to send the account information to the snapshot unit (20) in response to the notification from the first determination sub-unit (102), to receive the export end notification returned from the snapshot unit (20), and to send the export end notification to the first determination sub-unit (102).

11. The device according to claim 9 or 10, wherein the snapshot unit (20) further comprises a second notification sub-unit (201), a second determination sub-unit (202) and an export sub-unit (203), wherein:
the second notification sub-unit (201) is adapted to receive the account information sent from the account debiting unit (10), to send the account information to the second determination sub-unit (202), to receive the export end notification sent from the second determination sub-unit (202), and to send the export end notification to the account debiting unit (10);
the second determination sub-unit (202) is adapted to determine whether the account data corresponding to the account information has been exported in accordance with the received account information; and if so, to send the export end notification directly to the second notification sub-unit (201), otherwise, to send an export request to the export sub-unit (203), and to receive a process result and to send the export end notification to the second notification sub-unit (201); and
the export sub-unit (203) is adapted to export the account data, to first export the account data corresponding to the account information in response to the export request sent from the second determination sub-unit (202), and to return the process result.

12. The device according to claim 11, wherein the snapshot unit (20) further comprises a snapshot status sub-unit (204) adapted to determine a snapshot status in accordance with a snapshot process status of the snapshot unit (20).

13. A real time charging system, **characterized by** comprising an account debiting unit (10), an account data unit (30), a snapshot unit (20) and a phone bill processing unit (40), wherein:
the account debiting unit (10) is adapted to receive an account debiting request from an external function entity, to send account information in the account debiting request to the snapshot unit (20), to receive an export end notification fed back from the snapshot unit (20), to send the account debiting request to the account data unit (30), and to return an account debiting process result to the external function entity;
the account data unit (30) is adapted to store the account data and to perform an account debiting process in response to the account debiting request from the account debiting unit (10);
the snapshot unit (20) is adapted to export the account data stored in the account data unit (30), to first export the account data corresponding to the account information upon reception of the account information sent from the account debiting unit (10), and to send the export end notification to the account debiting unit (10); and
the phone bill processing unit (40) is adapted to divide a phone bill crossing a snapshot time point and to export phone bill data before the snapshot time point.

14. The system according to claim 13, wherein the phone bill processing unit (40) further comprises a second reception sub-unit (401), a third determination sub-unit (402), a storage sub-unit (403) and a phone bill division sub-unit (404), wherein:
the second reception sub-unit (401) is adapted to receive a phone bill write request and to send the phone bill write request to the third determination sub-unit (402);
the third determination sub-unit (402) is adapted to determine whether the phone bill corresponding to the phone bill write request crosses the snapshot time point in response to the received phone bill write request, and if so, to send a phone bill division request to the phone bill division sub-unit (404), and to send the phone bill write request to the storage sub-unit in accordance with a returned phone bill division result; otherwise, to send the phone bill write request directly to the storage sub-unit (403);
the storage sub-unit (403) is adapted to store the phone bill data and to write the corresponding phone bill into the phone bill data in response to the phone bill write request sent from the third determination sub-unit (402); and
the phone bill division sub-unit (404) is adapted to divide the corresponding phone bill in response to the phone bill division request sent from the third determination sub-unit (402) and to return the phone bill division result.

15. The system according to claim 14, wherein the phone bill processing unit (40) further comprises a time slicing unit (405) adapted to obtain a length of a phone bill division time slice and to send the time slice to the phone bill division sub-unit (404); and
the phone bill division sub-unit (404) divides the phone bill by the received time slice.

## Patentansprüche

1. Kontodatenmomentaufnahme-Verfahren, das Folgendes umfasst:
Empfangen einer Kontobelastungsanforderung (11) und Exportieren von Kontodaten, die Kontoinformationen in der Kontobelastungsanforderung (13) entsprechen, wenn ein fortdauernder Momentaufnahmeprozess der Kontodaten (12) bestimmt wird; und
Ausführen eines Kontobelastungsprozesses in Übereinstimmung mit der Kontobelastungsanforderung (14).

2. Verfahren nach Anspruch 1, wobei nach dem Empfangen der Kontobelastungsanforderung das Verfahren ferner Folgendes umfasst:
Bestimmen, ob ein derzeitiger Momentaufnahmestatus ein Unter-Momentaufnahmestatus ist, in dem der Momentaufnahmeprozess an den Kontodaten ausgeführt wird, und wenn ja, Bestimmen des fortdauernden Momentaufnahmeprozesses der Kontodaten.

3. Verfahren nach Anspruch 2, wobei dann, wenn bestimmt wird, dass der derzeitige Momentaufnahmestatus ein Nicht-Momentaufnahmestatus ist, in dem kein Momentaufnahmeprozess an den Kontodaten ausgeführt wird, der Kontobelastungsprozess in Übereinstimmung mit der Kontobelastungsanforderung direkt ausgeführt wird.

4. Verfahren nach Anspruch 3, wobei der Momentaufnahmeprozess der Kontodaten zu einem im Voraus festgelegten Momentaufnahmezeitpunkt gestartet wird und der derzeitige Momentaufnahmestatus als der Unter-Momentaufnahmestatus festgelegt wird; und
der derzeitige Momentaufnahmestatus als der Nicht-Momentaufnahmestatus am Ende des Momentaufnahmeprozesses der Kontodaten festgelegt wird.

5. Verfahren nach Anspruch 1, wobei nach dem Empfangen der Kontobelastungsanforderung das Verfahren ferner Folgendes umfasst: Bestimmen, ob die Kontodaten, die den Kontoinformationen in der Kontobelastungsanforderung entsprechen, exportiert worden sind, und wenn ja, direktes Zurückleiten einer Exportendemeldung; andernfalls Exportieren der Kontodaten, die den Kontoinformationen entsprechen, und Zurückleiten der Exportendemeldung.

6. Kontosaldoverfahren, das Folgendes umfasst:
Erhalten von Kontodaten, das Folgendes umfasst: Empfangen einer Kontobelastungsanforderung, Exportieren von Kontodaten, die Kontoinformationen in der Kontobelastungsanforderung entsprechen, wenn ein fortdauernder Momentaufnahmeprozess der Kontodaten bestimmt wird, Ausführen eines Kontobelastungsprozesses als Reaktion auf die Kontobelastungsanforderung und Erhalten der resultierenden Kontodaten aus dem Momentaufnahmeprozess (21);
Erhalten von Telefonrechnungsdaten, das Folgendes umfasst: Unterteilen einer Telefonrechnung, die durch einen Momentaufnahmezeitpunkt verläuft, in eine erste Telefonrechnung und eine zweite Telefonrechnung, Schreiben der ersten Telefonrechnung, die vor dem Momentaufnahmezeitpunkt erzeugt wird, in Telefonrechnungsdaten vor dem Momentaufnahmezeitpunkt, Schreiben der zweiten Telefonrechnung, die nach dem Momentaufnahmezeitpunkt erzeugt wird, in Telefonrechnungsdaten nach dem Momentaufnahmezeitpunkt und Erhalten der Telefonrechnungsdaten vor dem Momentaufnahmezeitpunkt (22); und
Vergleichen der Kontodaten und der Telefonrechnungsdaten vor dem Momentaufnahmezeitpunkt, um einen Kontosaldo (23) zu erzielen.

7. Verfahren nach Anspruch 6, wobei das Unterteilen der Telefonrechnung, die durch den Momentaufnahmezeitpunkt verläuft, in die erste Telefonrechnung und die zweite Telefonrechnung Folgendes umfasst:
Unterteilen der Telefonrechnung in die erste Telefonrechnung und in die zweite Telefonrechnung, wobei der letzte Zeitschlitz vor dem Momentaufnahmezeitpunkt eine Grenze gemäß einem im Voraus festgelegten Zeitschlitz ist.

8. Computerlesbares Speichermedium, **dadurch gekennzeichnet, dass** es ein Computerprogramm enthält, das einen oder mehrere Prozessoren in die Lage versetzt, das Verfahren nach Anspruch 6 zu implementieren.

9. Kontodaten-Momentaufnahmevorrichtung, die eine Kontobelastungseinheit, eine Kontodateneinheit und eine Momentaufnahmeeinheit enthält, wobei:
die Kontobelastungseinheit (10) dazu ausgelegt ist, eine Kontobelastungsanforderung zu empfangen, Kontoinformationen in der Kontobelastungsanforderung zu der Momentaufnahmeeinheit (20) zu senden, wenn ein fortdauernder Momentaufnahmeprozess der Kontodaten bestimmt wird, eine Exportendemeldung, die von der Momentaufnahmeeinheit zurückgeleitet wird, zu empfangen und die Kontobelastungsanforderung zu der Kontodateneinheit (30) zu senden;
die Momentaufnahmeeinheit (20) dazu ausgelegt ist, die in der Kontodateneinheit (30) gespeicherten Kontodaten zu exportieren, die von der Kontobelastungseinheit (10) gesendeten Kontoinformationen zu empfangen, die den Kontoinformationen entsprechenden Kontodaten zu exportieren und die Exportendemeldung zu der Kontobelastungseinheit (10) zurückzuleiten; und
die Kontodateneinheit (30) dazu ausgelegt ist, die Kontodaten zu speichern und einen Kontobelastungsprozess als Reaktion auf die Kontobelastungsanforderung von der Kontobelastungseinheit (10) auszuführen.

10. Vorrichtung nach Anspruch 9, wobei die Kontobelastungseinheit (10) ferner eine erste Empfangsuntereinheit (101), eine erste Bestimmungsuntereinheit (102), eine Kontobelastungsuntereinheit (103) und eine erste Meldeuntereinheit umfasst, wobei:
die erste Empfangsuntereinheit (101) dazu ausgelegt ist, die Kontobelastungsanforderung zu empfangen und die Anforderung zu der ersten Bestimmungsuntereinheit (102) zu senden;
die erste Bestimmungsuntereinheit (102) dazu ausgelegt ist, zu bestimmen, ob die Kontodaten momentan in einem Momentaufnahmestatus sind, und wenn ja, die Kontoinformationen in der Kontobelastungsanforderung zu der ersten Meldeuntereinheit (104) zu senden, die Exportendemeldung, die von der ersten Meldeuntereinheit (104) zurückgeleitet wird, zu empfangen und die Kontobelastungsanforderung zu der Kontobelastungsuntereinheit (103) zu senden;
andernfalls die Kontobelastungsanforderung direkt zu der Kontobelastungsuntereinheit (103) zu senden;
die Kontobelastungsuntereinheit (103) dazu ausgelegt ist, den Kontobelastungsprozess an den Kontodaten als Reaktion auf die empfangene Kontobelastungsanforderung auszuführen; und
die erste Meldeuntereinheit (104) dazu ausgelegt ist, die Kontoinformationen zu der Momentaufnahmeeinheit (20) als Reaktion auf die Meldung von der ersten Bestimmungsuntereinheit (102) zu senden, die Exportendemeldung, die von der Momentaufnahmeeinheit (20) zurückgeleitet wird, zu empfangen und die Exportendemeldung zu der ersten Bestimmungsuntereinheit (102) zu senden.

11. Vorrichtung nach Anspruch 9 oder 10, wobei die Momentaufnahmeeinheit (20) ferner eine zweite Meldeuntereinheit (201), eine zweite Bestimmungsuntereinheit (202) und eine Exportuntereinheit (203) umfasst, wobei:
die zweite Meldeuntereinheit (201) dazu ausgelegt ist, die Kontoinformationen, die von der Kontobelastungseinheit (10) gesendet werden, zu empfangen, die Kontoinformationen zu der zweiten Bestimmungsuntereinheit (202) zu senden, die Exportendemeldung, die von der zweiten Bestimmungsuntereinheit (202) gesendet wird, zu empfangen und die Exportendemeldung zu der Kontobelastungseinheit (10) zu senden;
die zweite Bestimmungsuntereinheit (202) dazu ausgelegt ist, zu bestimmen, ob die Kontodaten, die den Kontoinformationen entsprechen, in Übereinstimmung mit den empfangenen Kontoinformationen exportiert worden sind; und wenn ja, die Exportendemeldung direkt zu der zweiten Meldeuntereinheit (201) zu senden, andernfalls eine Exportanforderung zu der Exportuntereinheit (203) zu senden und ein Prozessergebnis zu empfangen und die Exportendemeldung zu der zweiten Meldeuntereinheit (201) zu senden; und
die Exportuntereinheit (203) dazu ausgelegt ist, die Kontodaten zu exportieren, zunächst die Kontodaten, die den Kontoinformationen entsprechen, als Reaktion auf die Exportanforderung, die von der zweiten Bestimmungsuntereinheit (202) gesendet wird, zu exportieren und das Prozessergebnis zurückzuleiten.

12. Vorrichtung nach Anspruch 11, wobei die Momentaufnahmeeinheit (20) ferner eine Momentaufnahmestatus-Untereinheit (204) enthält, die dazu ausgelegt ist, einen Momentaufnahmestatus in Übereinstimmung mit einem Momentaufnahmeprozessstatus der Momentaufnahmeeinheit (20) zu bestimmen.

13. Echtzeit-Belastungssystem, **dadurch gekennzeichnet, dass** es eine Kontobelastungseinheit (10), eine Kontodateneinheit (30), eine Momentaufnahmeeinheit (20) und eine Telefonrechnungs-Verarbeitungseinheit (40) umfasst, wobei:
die Kontobelastungseinheit (10) dazu ausgelegt ist, eine Kontobelastungsanforderung von einer externen Funktionsentität zu empfangen, Kontoinformationen in der Kontobelastungsanforderung zu der Momentaufnahmeeinheit (20) zu senden, eine von der Momentaufnahmeeinheit (20) rückgekoppelte Exportendemeldung zu empfangen, die Kontobelastungsanforderung zu der Kontodateneinheit (30) zu senden und ein Kontobelastungsprozess-Ergebnis zu der externen Funktionsentität zurückzuleiten;
die Kontodateneinheit (30) dazu ausgelegt ist, die Kontodaten zu speichern und einen Kontobelastungsprozess als Reaktion auf die Kontobelastungsanforderung von der Kontobelastungseinheit (10) auszuführen;
die Momentaufnahmeeinheit (20) dazu ausgelegt ist, die in der Kontodateneinheit (30) gespeicherten Kontodaten zu exportieren, zunächst die den Kontoinformationen entsprechenden Kontodaten bei Empfang der von der Kontobelastungseinheit (10) gesendeten Kontoinformationen zu exportieren und die Exportendemeldung zu der Kontobelastungseinheit (10) zu senden; und
die Telefonrechnungs-Verarbeitungseinheit (40) dazu ausgelegt ist, eine Telefonrechnung, die durch einen Momentaufnahmezeitpunkt verläuft, zu unterteilen und Telefonrechnungsdaten vor dem Momentaufnahmezeitpunkt zu exportieren.

14. System nach Anspruch 13, wobei die Telefonrechnungs-Verarbeitungseinheit (40) ferner eine zweite Empfangsuntereinheit (401), eine dritte Bestimmungsuntereinheit (402), eine Speicheruntereinheit (403) und eine Telefonrechnungs-Unterteilungsuntereinheit (404) umfasst, wobei:
die zweite Empfangsuntereinheit (401) dazu ausgelegt ist, eine Telefonrechnungs-Schreibanforderung zu empfangen und die Telefonrechnungs-Schreibanforderung zu der dritten Bestimmungsuntereinheit (402) zu senden;
die dritte Bestimmungsuntereinheit (402) dazu ausgelegt ist, als Reaktion auf die empfangene Telefonrechnungs-Schreibanforderung zu bestimmen, ob die der Telefonrechnungs-Schreibanforderung entsprechende Telefonrechnung durch den Momentaufnahmezeitpunkt verläuft, und wenn ja, eine Telefonrechnungs-Unterteilungsanforderung zu der Telefonrechnungs-Unterteilungsuntereinheit (404) zu senden und die Telefonrechnungs-Schreibanforderung in Übereinstimmung mit einem zurückgeleiteten Telefonrechnungs-Unterteilungsergebnis zu der Speicheruntereinheit zu senden; andernfalls die Telefonrechnungs-Schreibanforderung direkt zu der Speicheruntereinheit (403) zu senden;
die Speicheruntereinheit (403) dazu ausgelegt ist, die Telefonrechnungsdaten zu speichern und die entsprechende Telefonrechnung in Telefonrechnungsdaten als Reaktion auf die Telefonrechnungs-Schreibanforderung, die von der dritten Bestimmungsuntereinheit (402) gesendet wird, zu schreiben; und
die Telefonrechnungs-Unterteilungsuntereinheit (404) dazu ausgelegt ist, die entsprechende Telefonrechnung als Reaktion auf die Telefonrechnungs-Unterteilungsanforderung, die von der dritten Bestimmungsuntereinheit (402) gesendet wird, zu unterteilen und das Telefonrechnungs-Unterteilungsergebnis zurückzuleiten.

15. System nach Anspruch 14, wobei die Telefonrechnungs-Verarbeitungseinheit (40) ferner eine Zeitschlitzbildungseinheit (405) umfasst, die dazu ausgelegt ist, eine Länge eines Telefonrechnungs-Unterteilungszeitschlitzes zu erhalten und den Zeitschlitz zu der Telefonrechnungs-Unterteilungsuntereinheit (404) zu senden; und die Telefonrechnungs-Unterteilungsuntereinheit (404) die Telefonrechnung durch den empfangenen Zeitschlitz unterteilt.

## Revendications

1. Procédé de production d'instantané de données de compte, comprenant :
la réception d'une requête de débit de compte (11), et l'exportation de données de compte correspondant à des informations de compte dans la requête de débit de compte (13) à la détermination d'un processus de production d'instantané en cours des données de compte (12) ; et
l'exécution d'un processus de débit de compte en fonction de la requête de débit de compte (14).

2. Procédé selon la revendication 1, comprenant en outre après la réception de la requête de débit de compte :
la détermination qu'un état d'instantané courant est ou non un sous-état d'instantané dans lequel le processus de production d'instantané est exécuté sur les données de compte, et dans l'affirmative, la détermination du processus de production d'instantané en cours des données de compte.

3. Procédé selon la revendication 2, dans lequel s'il est déterminé que l'état d'instantané courant est un non-état d'instantané dans lequel aucun processus de production d'instantané n'est exécuté sur les données de compte, le processus de débit de compte est exécuté directement en fonction de la requête de débit de compte.

4. Procédé selon la revendication 3, dans lequel le processus de production d'instantané des données de compte est lancé à un point temporel d'instantané prédéfini, et comprenant le réglage de l'état d'instantané courant comme le sous-état d'instantané ; et
le réglage de l'état d'instantané courant comme le non-état d'instantané à la fin du processus de production d'instantané des données de compte.

5. Procédé selon la revendication 1, comprenant en outre après la réception de la requête de débit de compte : la détermination que les données de compte correspondant aux informations de compte dans la requête de débit de compte ont été exportées ou non, et dans l'affirmative, le renvoi direct d'une notification de fin d'exportation ; dans le cas contraire, l'exportation des données de compte correspondant aux informations de compte et le renvoi de la notification de fin d'exportation.

6. Procédé de solde de compte, comprenant :
l'obtention de données de compte, comprenant : la réception d'une requête de débit de compte, l'exportation des données de compte correspondant aux informations de compte dans la requête de débit de compte à la détermination d'un processus de production d'instantané en cours des données de compte, l'exécution d'un processus de débit de compte en réponse à la requête de débit de compte, et l'obtention des données de compte résultantes à partir du processus de production d'instantané (21) ;
l'obtention de données de facture téléphonique, comprenant : la division d'une facture téléphonique franchissant un point temporel d'instantané en une première facture téléphonique et une seconde facture téléphonique, l'écriture de la première facture téléphonique générée avant le point temporel d'instantané en données de facture téléphonique avant le point temporel d'instantané, l'écriture de la seconde facture téléphonique générée après le point temporel d'instantané en données de facture téléphonique après le point temporel d'instantané, et l'obtention des données de facture téléphonique avant le point temporel d'instantané (22) ; et
la comparaison des données de compte et des données de facture téléphonique avant le point temporel d'instantané afin de réaliser un solde de compte (23).

7. Procédé selon la revendication 6, dans lequel la division de la facture téléphonique franchissant le point temporel d'instantané en la première facture téléphonique et la seconde facture téléphonique comprend :
la division de la facture téléphonique en la première facture téléphonique et la seconde facture téléphonique, la dernière tranche de temps avant le point temporel d'instantané constituant une frontière en fonction d'une tranche de temps prédéfinie.

8. Support de mémoire lisible par ordinateur, **caractérisé en ce qu'**il comprend un programme informatique permettant à un ou plusieurs processeurs de mettre en oeuvre le procédé selon la revendication 6.

9. Dispositif de production d'instantané de données de compte, comprenant une unité de débit de compte, une unité de données de compte et une unité de production d'instantané, dans lequel :
l'unité de débit de compte (10) est adaptée pour recevoir une requête de débit de compte, envoyer les informations de compte dans la requête de débit de compte à l'unité de production d'instantané (20) à la détermination d'un processus de production d'instantané en cours des données de compte, recevoir une notification de fin d'exportation renvoyée par l'unité de production d'instantané, et envoyer la requête de débit de compte à l'unité de données de compte (30) ;
l'unité de production d'instantané (20) est adaptée pour exporter les données de compte mémorisées dans l'unité de données de compte (30), recevoir les informations de compte envoyées par l'unité de débit de compte (10), exporter les données de compte correspondant aux informations de compte, et renvoyer la notification de fin d'exportation à l'unité de débit de compte (10) ; et
l'unité de données de compte (30) est adaptée pour mémoriser les données de compte et exécuter un processus de débit de compte en réponse à la requête de débit de compte provenant de l'unité de débit de compte (10).

10. Dispositif selon la revendication 9, dans lequel l'unité de débit de compte (10) comprend en outre une première sous-unité de réception (101), une première sous-unité de détermination (102), une sous-unité de débit de compte (103) et une première sous-unité de notification, dans lequel :
la première sous-unité de réception (101) est adaptée pour recevoir la requête de débit de compte et envoyer la requête à la première sous-unité de détermination (102) ;
la première sous-unité de détermination (102) est adaptée pour déterminer si les données de compte figurent actuellement dans un état d'instantané, et dans l'affirmative, envoyer les informations de compte dans la requête de débit de compte à la première sous-unité de notification (104), recevoir la notification de fin d'exportation renvoyée par la première sous-unité de notification (104) et envoyer la requête de débit de compte à la sous-unité de débit de compte (103) ; dans le cas contraire, envoyer la requête de débit de compte directement à la sous-unité de débit de compte (103) ;
la sous-unité de débit de compte (103) est adaptée pour exécuter le processus de débit de compte sur les données de compte en réponse à la requête de débit de compte reçue ; et
la première sous-unité de notification (104) est adaptée pour envoyer les informations de compte à l'unité de production d'instantané (20) en réponse à la notification par la première sous-unité de détermination (102), recevoir la notification de fin d'exportation renvoyée par l'unité de production d'instantané (20), et envoyer la notification de fin d'exportation à la première sous-unité de détermination (102).

11. Dispositif selon la revendication 9 ou 10, dans lequel l'unité de production d'instantané (20) comprend en outre une seconde sous-unité de notification (201), une seconde sous-unité de détermination (202) et une sous-unité d'exportation (203), dans lequel :
la seconde sous-unité de notification (201) est adaptée pour recevoir les informations de compte envoyées par l'unité de débit de compte (10), envoyer les informations de compte à la seconde sous-unité de détermination (202), recevoir la notification de fin d'exportation envoyée par la seconde sous-unité de détermination (202), et envoyer la notification de fin d'exportation à l'unité de débit de compte (10) ;
la seconde sous-unité de détermination (202) est adaptée pour déterminer si les données de compte correspondant aux informations de compte ont été exportées en fonction des informations de compte reçues ; et dans l'affirmative, envoyer la notification de fin d'exportation directement à la seconde sous-unité de notification (201) ; dans le cas contraire, envoyer une requête d'exportation à la sous-unité d'exportation (203), et recevoir un résultat de processus et envoyer la notification de fin d'exportation à la seconde sous-unité de notification (201) ; et
la sous-unité d'exportation (203) est adaptée pour exporter les données de compte, exporter tout d'abord les données de compte correspondant aux informations de compte en réponse à la requête d'exportation envoyée par la seconde sous-unité de détermination (202), et renvoyer le résultat du processus.

12. Dispositif selon la revendication 11, dans lequel l'unité de production d'instantané (20) comprend en outre une sous-unité d'état d'instantané (204) adaptée pour déterminer un état d'instantané en fonction d'un état de processus de production d'instantané de l'unité de production d'instantané (20).

13. Système de facturation en temps réel, **caractérisé en ce qu'**il comprend une unité de débit de compte (10), une unité de données de compte (30), une unité de production d'instantané (20) et une unité de traitement de facture téléphonique (40), dans lequel :
l'unité de débit de compte (10) est adaptée pour recevoir une requête de débit de compte depuis une entité de fonction externe, envoyer les informations de compte dans la requête de débit de compte à l'unité de production d'instantané (20), recevoir une notification de fin d'exportation renvoyée par l'unité de production d'instantané (20), envoyer la requête de débit de compte à l'unité de données de compte (30), et renvoyer un résultat de processus de débit de compte à l'entité de fonction externe ;
l'unité de données de compte (30) est adaptée pour mémoriser les données de compte et exécuter un processus de débit de compte en réponse à la requête de débit de compte provenant de l'unité de débit de compte (10) ;
l'unité de production d'instantané (20) est adaptée pour exporter les données de compte mémorisées dans l'unité de données de compte (30), exporter tout d'abord les données de compte correspondant aux informations de compte à la réception des informations de compte envoyées par l'unité de débit de compte (10), et envoyer la notification de fin d'exportation à l'unité de débit de compte (10) ; et
l'unité de traitement de facture téléphonique (40) est adaptée pour diviser une facture téléphonique franchissant un point temporel d'instantané et exporter les données de facture téléphonique avant le point temporel d'instantané.

14. Système selon la revendication 13, dans lequel l'unité de traitement de facture téléphonique (40) comprend en outre une seconde sous-unité de réception (401), une troisième sous-unité de détermination (402), une sous-unité de mémorisation (403) et une sous-unité de division de facture téléphonique (404), dans lequel :
la seconde sous-unité de réception (401) est adaptée pour recevoir une requête d'écriture de facture téléphonique et envoyer la requête d'écriture de facture téléphonique à la troisième sous-unité de détermination (402) ;
la troisième sous-unité de détermination (402) est adaptée pour déterminer si la facture téléphonique correspondant à la requête d'écriture de facture téléphonique franchit le point temporel d'instantané en réponse à la requête d'écriture de facture téléphonique reçue, et dans l'affirmative, envoyer une requête de division de facture téléphonique à la sous-unité de division de facture téléphonique (404), et envoyer la requête d'écriture de facture téléphonique à la sous-unité de mémorisation en fonction d'un résultat de division de facture téléphonique renvoyé ; dans le cas contraire, envoyer directement la requête d'écriture de facture téléphonique à la sous-unité de mémorisation (403) ;
la sous-unité de mémorisation (403) est adaptée pour mémoriser les données de facture téléphonique et écrire la facture téléphonique correspondante dans les données de facture téléphonique en réponse à la requête d'écriture de facture téléphonique envoyée par la troisième sous-unité de détermination (402) ; et
la sous-unité de division de facture téléphonique (404) est adaptée pour diviser la facture téléphonique correspondante en réponse à la requête de division de facture téléphonique envoyée par la troisième sous-unité de détermination (402) et renvoyer le résultat de division de facture téléphonique.

15. Système selon la revendication 14, dans lequel l'unité de traitement de facture téléphonique (40) comprend en outre une unité de découpage en tranches de temps (405) adaptée pour obtenir une longueur d'une tranche de temps de division de facture téléphonique et envoyer la tranche de temps à la sous-unité de division de facture téléphonique (404) ; et
la sous-unité de division de facture téléphonique (404) divise la facture téléphonique par la tranche de temps reçue.
